# EUROPÄISCHE PATENTSCHRIFT

(11) **EP 0 801 109 B1**
(45) Veröffentlichungstag und Bekanntmachung des Hinweises auf die Patenterteilung: **15.10.2003**
(21) Anmeldenummer: 97105189.1
(22) Anmeldetag: 27.03.1997
(51) Int. Cl.: C08L 81/02, C08L 81/06, C08L 81/00

(54) **Mischungen aus Thermoplasten und oxidierten Polyarylensulfiden**
Compositions of thermoplasts and oxidized polyarylenesulfides
Compositions à partir de résines thermoplastiques et de poly(sulphure d'arylènes)

(30) Priorität: 09.04.1996 DE 19613979
(43) Veröffentlichungstag der Anmeldung: 15.10.1997
(73) Patentinhaber: Ticona GmbH, 65451 Kelsterbach (DE)
(72) Erfinder: Scheckenbach, Helmut, 63225 Langen (DE)

(56) Entgegenhaltungen:
- EP-A- 0 266 791
- EP-A- 0 388 969
- EP-A- 0 668 324
- EP-A- 0 710 702
- EP-A- 0 718 368
- EP-A- 0 738 760
- EP-A- 0 791 664
- WO-A-96/05252
- DE-A- 4 323 121
- DE-A- 4 323 181
- DE-A- 4 428 737
- DE-A- 4 440 010
- DATABASE WPI Section Ch, Week 8851 Derwent Publications Ltd., London, GB; Class A18, AN 88-365210 XP002049558 & JP 63 275 667 A (KANEBO LTD) , 14.November 1988
- DATABASE WPI Section Ch, Week 8515 Derwent Publications Ltd., London, GB; Class A14, AN 85-089682 XP002049559 & JP 60 038 465 A (SUMITOMO CHEM CO LTD) , 28.Februar 1985
- DATABASE WPI Section Ch, Week 8032 Derwent Publications Ltd., London, GB; Class A26, AN 80-55695C XP002049560 & JP 55 082 130 A (TORAY IND INC) , 20.Juni 1980
- CHEUNG M F ET AL: "TENSILE FRACTURE MORPHOLOGY OF POLYSULFONE-POLY(PHENYLENE SULFIDE) BLENDS" POLYMER BULLETIN, Bd. 26, Nr. 3, 1.August 1991, Seiten 349-356, XP000237480

## Beschreibung

Die Erfindung betrifft die Verwendung von Mischungen von Thermoplasten und oxidierten Polyarylensulfiden als Werkstoffe in Anwendungen, die einen geringen Abrieb und ein geringes Kriechverhalten fordern.

Thermoplaste sind seit längerer Zeit bekannt. Sie zeichnen sich durch eine leichte Verarbeitbarkeit zu Formteilen aus. Das breite Eigenschaftsspektrum dieser Werkstoffgruppe macht sie für viele Anwendungen zum idealen Werkstoff. Von Nachteil ist jedoch häufig das tribologische Verhalten sowie die Kriechneigung dieser Werkstoffgruppe.

Zur Verbesserung der tribologischen Eigenschaften von Thermoplasten werden bisher Polyesterverbindungen, Polyetheretherketone, Polyetherimide oder Polyimide zugesetzt. Diese Additive bergen jedoch oft Nachteile:
1. die Additive können sich bei den Verarbeitungstemperaturen von Hochtemperaturthermoplasten zersetzen,
2. eine schlechte Mahlbarkeit der Additive führt zu einer inhomogenen Verteilung im Thermoplasten und
3. der Zusatz der Additive setzt teilweise die Chemikalienbeständigkeit und Wärmebeständigkeit der Thermoplaste herab.

DE 43 23 181 A1 und DE 43 23121 A1 beschreiben Mischungen von Fluorpolymeren und oxidierten Polyarylensulfiden, wobei das Abriebverhalten der Fluorpolymere durch den Zusatz von oxidierten Polyarylensulfiden verbessert wird.

Es bestand daher die Aufgabe, die bei den Thermoplasten genannten Nachteile zu verbessern.

Die Erfindung betrifft daher die Verwendung einer Polymermischung aus
A) 90 bis 99,5 Gew.-% mindestens eines Thermoplasten, der kein Polysulfon oder thermoplastisch verarbeitbares Fluorpolymer ist,
B) 0,5 bis 10 Gew.-% mindestens eines oxidierten Polyarylensulfids, das ein lineares oder verzweigtes Polyarylensulfid (-Ar-S-, Ar = Arylen) ist, dessen Schwefelgruppen teilweise oder vollständig in Sulfoxid- und/oder Sulfongruppen überführt worden sind, und
C) gegebenenfalls weiteren üblichen Additiven,
als Werkstoffe in Anwendungen, die einen geringen Abrieb und ein geringes Kriechverhalten fordern. Die Gew.-% Angaben beziehen sich auf das Gesamtgewicht der Polymermischung.

Der Anteil des Thermoplasten an der Polymermischung beträgt im allgemeinen 90 bis 99,5 Gew.-%, vorzugsweise 95 bis 99 Gew.-%. Der Anteil des oxidierten Polyarylensulfids an der Polymermischung beträgt im allgemeinen 0,5 bis 10 Gew.-%, vorzugsweise 1 bis 5 Gew.-%. Alle vorstehenden Gew.-% Angaben beziehen sich auf das Gesamtgewicht der Polymermischung.

Mischungen aus Thermoplasten und oxidierten Polyarylensulfiden sind z.B. aus der EP-A-791664, der EP-A-738760, der EP-A-710702, der EP-A-718368 sowie der WO-A-9615178 bekannt.

Es wurde gefunden, daß der Zusatz von oxidierten Polyarylensulfiden, insbesondere Polyarylensulfonen, zu Thermoplasten das tribologische Verhalten dieser Thermoplaste verbessert. Dies ist überraschend, da Thermoplaste sich physikalisch und chemisch gänzlich anders als Fluorpolymere verhalten. So sind Thermoplaste harte Materialien, die sich nur bei hohen Temperaturen formen und verarbeiten lassen, während Fluorpolymere weiche, fließende Materialien darstellen. Ein wesentlicher Unterschied zwischen Thermoplasten und Fluorpolymeren besteht darin, daß es sich bei den Fluorpolymeren um Polymere handelt, bei denen der Wasserstoff völlig oder zu einem wesentlichen Teil durch Fluor ersetzt ist.

Überraschend wurde auch gefunden, daß der Zusatz von oxidierten Polyarylensulfiden zu flüssigkristallinen Thermoplasten das tribologische Verhalten und die mechanische Festigkeit dieser Thermoplaste verbessert. Vorzugsweise liegt der Gehalt an oxidierten Polyarylensulfiden bei Verwendung von flüssigkristallinen Thermoplasten bei 1 bis 10 Gew.-%.

Unter Thermoplasten werden Polymere verstanden, die nach thermoplastischen Verfahren verarbeitbar sind. Diese sind wohlbekannt und werden beispielsweise beschrieben in Ullmann's Encyclopedia of Industrial Chemistry, VCH Verlagsgesellschaft mbH, Weinheim-New York, worauf Bezug genommen wird. Hierzu gehören beispielsweise Polyacrylamide und Polyacrylsäuren, Volume A21, S. 143-156; Polyacrylate, Volume A21, S. 157-178; Polyamide, Volume A21, S. 179-206; Polycarbonate, Volume A21, S.207-216; Polyester, Volume A21, S. 227-252; Polyimide, Volume A21, S. 253-273; Polymerblends, Volume A21, S. 274-305; Elektrisch leitfähige Polymere, Volume A21, S. 429-448; Hochtemperaturbeständige Polymere, Volume A21, S. 449-472; Polymethylmethacrylate, Volume A21, S. 473-486; Polyolefine, Volume A21, S. 487-578; Polyoxyalkylene, Volume A21, S. 579-590; Polyacetale, Volume A21, S. 591-604; Polyphenylenoxide, Volume A21, S. 605-614; Polystyrole und Styrolcopolymere, Volume A21, S. 615-664; Polyurethane, Volume A21, S. 665-716; Polyvinylchloride, Volume A21, S.717-742; Polyvinylcompounds, Volume A21, S. 743-758; Polyvinylester, Volume A22, S. 1-10; Polyvinylether, Volume A22, S. 11-16; Polyvinylidenchloride, Volume A22, S. 17-30 und Silikone, Volume A24, S.57-94. Weitere Thermoplaste werden im Kunststoff-Handbuch Band 3-3, G. W. Becker und D. Braun (Eds.), Carl Hanser Verlag, München 1994, beschrieben, beispielsweise flüssigkristalline Polymere, S. 219-258, Polyaryletherketone, S. 359-385, Polyetherimide, S. 297-335, sowie Polyethersulfone, S. 141-217. Die Bezeichnung Thermoplast schließt auch Mischungen oder Blends von Thermoplasten ein.

Polyarylensulfide und deren Herstellung sind in Ullmann's Encyclopedia of Industrial Chemistry, Volume A21, B. Elvers, S. Hawkins und G. Schulz (Eds.), VCH, Weinheim-New York 1992, S. 463-472 beschrieben, worauf Bezug genommen wird. Die Synthese von sulfongruppenhaltigen Polyarylensulfiden ist in Chimia 28(9), (1974) 567 beschrieben, worauf ebenfalls Bezug genommen wird.

Oxidierte Polyarylensulfide sind lineare und verzweigte Polyarylensulfide (-Ar-S-, Ar= Arylen), deren Schwefelgruppen teilweise oder vollständig in Sulfoxid- und/oder Sulfongruppen überführt worden sind. Oxidierte Polyarylensulfide und deren Herstellung werden in den deutschen Patentanmeldungen DE 43 14 737 und DE 43 14 738 beschrieben, worauf Bezug genommen wird. Oxidierte Polyarylensulfide im Sinne der Erfindung sind Polyarylensulfone, Polyarylensulfoxid-sulfone, Polyarylensulfid-sulfone und Polyarylensulfid-sulfoxid-sulfone, wobei im allgemeinen mindestens 10%, vorzugsweise mindestens 30% und insbesondere mindestens 60% der Schwefelbrücken in Sulfonbrücken umgewandelt sind.
Als Arylen wird Phenylen bevorzugt.

Oxidierte Polyarylensulfide sind besonders wärmebeständig und unter den Bedingungen einer thermoplastischen Verarbeitung sehr stabil. Die oxidierten Polyarylensulfide verhalten sich wie Füllstoffe in den Thermoplasten. Die mittlere Teilchengröße (d₅₀-Wert) der oxidierten Polyarylensulfide (B) gemäß der Erfindung liegt im allgemeinen im Bereich von 0,3 bis 500 µm, vorzugsweise 1 bis 300 µm und insbesondere 5 bis 50 µm.

Die in der Erfindung verwendeten Mischungen werden aus den Einzelkomponenten nach Standardmethoden in hierfür geeigneten Mischern hergestellt und anschließend nach bekannten Verfahren (z.B. Kneten, Spritzguß, Heißpressen, Extrusion, Blasformen) verarbeitet.

Die in der Erfindung verwendeten Mischungen können als Komponente C) übliche Additive enthalten, wie thermische Stabilisatoren, UV-Stabilisatoren, Antistatika, Flammschutzmittel, Farbstoffe, Pigmente, anorganische und/oder organische Füllstoffe sowie Gleitmittelzusätze wie Molybdändisulfid, Graphit oder Polytetrafluorethylen.

Neben der vorteilhaften Verwendung der Mischungen als Werkstoffe in Anwendungen, die einen geringen Abrieb und ein geringes Kriechverhalten fordern, wie Gleitlager oder Dichtungsmaterialien, können aus diesen Werkstoffen Fasern und Folien hergestellt werden, die einen geringeren Abrieb aufweisen.

Die Mischungen eignen sich als Werkstoffe zur Herstellung geformter Kunststoffteile wie Zahnräder, Zahnstangen, Lager, Ketten, Rollen, Räder oder Dichtungen.

### Beispiele

### Herstellung von oxidiertem Polyphenylensulfid:

63 kg Polyphenylensulfid-Pulver (d₅₀-Wert: 20 µm) mit einer T_{g} von 94 °C und einem Tₘ von 290 °C wurden in 219 I Eisessig bei 50 °C vorgelegt, 1,2 I konz.
Schwefelsäure zugegeben und 91 kg Wasserstoffperoxid (50%) über 3 h zugetropft, wobei sich die Temperatur auf 60 - 65 °C erhöhte. Nach einer Nachrührzeit von 2 h bei 65 °C und 1 h bei 80 °C wurde die Reaktionslösung abgekühlt, bei 50 °C abgesaugt, mit Wasser gewaschen und getrocknet. Ausbeute: 70 kg.
DSC-Daten: T_{g}: 352 °C, Tₘ: 520 °C (Zersetzung)
Elementaranalyse:
C: 55,6%, H: 3,2%, S: 24,6%, O: 16,0%.
Dies entspricht einem Schwefel-Oxidationsgrad im Polymer von etwa 65%.

Das so hergestellte oxidierte Polyphenylensulfid wurde in den Beispielen 1 bis 7 als Komponente B) eingesetzt.

Die Mischungsbestandteile Thermoplast (A) und oxidiertes Polyphenylensulfid (B) wurden bei Bedarf unter vermindertem Druck bei 120 °C und leichtem Stickstoffstrom getrocknet. Die trockenen Mischungsbestandteile wurden in einen Zweischneckenextruder (Typ: LSM 30.34 der Leistritz GmbH, Nürnberg, BR Deutschland) eingebracht, der Mischungsbestandteil (A) aufgeschmolzen und mit (B) vermischt. Anschließend wurde die Mischung in einem Wasserbad abgekühlt, granuliert und getrocknet. Aus den Granulaten wurden auf einer Spritzgußmaschine (Typ KM090/0210B, Krauss-Maffei, München, BR Deutschland) Prüfkörper nach DIN 16 770 hergestellt. An den Prüfkörpern wurden unmittelbar nach der Herstellung Eigenschaftswerte nach DIN/ISO gemessen.

Beim Beispiel 1 wurde der Abrieb mittels Verschleißwelle (Hoechst internes Verfahren) und die Reibungszahl auf einem UTI-Prüfstand (Prüfverfahren: Uhren-Technisches-Institut UTI) ermittelt.

Bei der Ermittlung des Abriebs mittels Verschleißwelle wird ein Prüfkörper (Durchmesser: 12,2 mm; Höhe: 18 mm) mit einer Kraft von 3,1 N gegen eine Welle (Durchmesser: 65 mm; Oberflächenrauhigkeit R_{z}: 0,7 µm) aus Stahl gedrückt. Die Welle dreht sich mit einer Umfangsgeschwindigkeit von 136 m/min. Nach einer Testzeit von 60 h (490 km) wurde der Abrieb mittels Wägung bestimmt.

Die tribologischen Kenndaten der Beispiele 2-7 wurden auf einem Stift-Scheibe-Prüfstand bestimmt. Hierbei wird ein Prüfstift in eine Halterung am unteren Ende eines Biegebalkens eingespannt. Am Biegebalken sind Dehnungsmeßstreifen für die Messung der Normal- und Reibkraft angebracht. Die Gewichte zur Erzeugung der Normalkraft werden am oberen Ende des Biegebalkens befestigt. Der Prüfstift wird senkrecht auf eine sich drehende Reibscheibe aus gehärtetem Stahl (100 Cr 6, Rockwellhärte HRC > 50) gedrückt. Die Oberflächenrauhigkeit der Reibscheibe wird vor jedem Versuch gemessen. Die Reibgeschwindigkeit wird konstant eingestellt. Durch den Verschleiß des Kunststoffstiftes an der Reibfläche senkt sich dieser mit dem Biegebalken ab. Die Absenkung wird mit einem induktiven Wegaufnehmer gemessen. Die Meßdaten werden online erfaßt und können mit einem Computer ausgewertet werden.

### 1. Mischungen aus Polyoxymethylen (POM) und oxidiertem Polyphenylensulfid :

Als POM wurde ®Hostaform C9021 (Produktform: Granulat) der Hoechst AG, Frankfurt a.M., BR Deutschland verwendet. Produkteigenschaften und Verarbeitungshinweise sind im Datenblatt "Hostaform" der Hoechst AG dokumentiert. Als Gleitmittel wurde zusätzlich noch Hostaflon TFX 9201 verwendet, ein Polytetrafluorethylen der Hoechst AG, Frankfurt a.M., BR Deutschland. Hierbei handelt es sich um ein Mikropulver (Primärkorngröße: ca. 4 µm, Sekundärkorngröße: ca. 200 nm) mit einem MVI (372 °C/2,16 kg) > 0,1 g/10 min.

| Verfahrensparameter: | |
|---|---|
| Extruder | Massetemperatur: 190 °C |
| Spritzgußmaschine | Massetemperatur: 190-200 °C |
| | Werkzeugwandtemperatur: 120 °C |

| Eigenschaftswerte: | | | |
|---|---|---|---|
| | 100% Hostaform C 9021 | 90% Hostaform C 9021 10% oxidiertes Polyphenylensulfid | 80% Hostaform C 9021 10% oxidiertes Polyphenylensulfid 10% Hostaflon TFX 9201 |
| Abrieb (K-Faktor)* [10⁻⁶mm³/Nm] | 7,5 | 1,8 | 1,3 |

| | | | |
|---|---|---|---|
| * Gleitgeschwindigkeit: 0,5 m/s, Anpreßdruck: 1 N/mm², Oberflächenrauhigkeit (R_{z}) = 1 µm | | | |

### 2. Mischungen aus Polybutylenterephthalat (PBT) und oxidiertem Polyphenylensulfid:

Es wurde ein PBT mit einem MVI (250 °C/2,16 kg) von 38 cm³/10 min (Produktform: Granulat) verwendet.

| Verfahrensparameter: | |
|---|---|
| Extruder | Massetemperatur: 250-260 °C |
| Spritzgußmaschine | Massetemperatur: 250-260 °C |
| | Werkzeugwandtemperatur: 80 °C |

| Eigenschaftswerte: | | | | |
|---|---|---|---|---|
| | | 100% PBT | 95% PBT 5% oxidiertes Polyphenylensulfid | 90% PBT 10% oxidiertes Polyphenylensulfid |
| | Abrieb (K-Faktor)* [10⁻⁶mm³/Nm] | 5,4 | 3,6 | 0,7 |

| | | | | |
|---|---|---|---|---|
| * Gleitgeschwindigkeit: 0,5 m/s, Anpreßdruck: 1 N/mm², Oberflächenrauhigkeit (R_{z}) = 1 µm | | | | |

### 3. Mischungen aus Polyethersulfon (PES) und oxidiertem Polyphenylensulfid :

Als PES wurde Radel A-200 (Produktform: Granulat) der Amoco Chemical Deutschland GmbH, Düsseldorf, BR Deutschland verwendet. Produkteigenschaften und Verarbeitungshinweise sind im Datenblatt "Amoco Performance Products" der Amoco dokumentiert.

| Verfahrensparameter: | |
|---|---|
| Extruder | Massetemperatur: 360-370 °C |
| Spritzgußmaschine | Massetemperatur: 360-370 °C |
| | Werkzeugwandtemperatur: 150 °C |

| Eigenschaftswerte: | | | | |
|---|---|---|---|---|
| | 100% Radel A-200 | 95% Radel A-200 5% oxidiertes Polyphenylensulfid | 90% Radel A-200 10% oxidiertes Polyphenylensulfid | 85% Radel A-200 15% oxidiertes Polyphenylensulfid |
| Abrieb (K-Faktor)* [10⁻⁶mm³/Nm] | 639 | 159 | 295 | 503 |

| | | | | |
|---|---|---|---|---|
| * Gleitgeschwindigkeit: 0,5 m/s, Anpreßdruck: 1 N/mm², Oberflächenrauhigkeit (R_{z}) = 0,5 µm | | | | |

### 4. Mischungen aus Flüssigkristallinen Polyestern (LCP) und oxidiertem Polyphenylensulfid:

Als LCP wurde ®Vectra A950 (Produktform: Granulat) der Hoechst AG, Frankfurt a.M., BR Deutschland verwendet. Produkteigenschaften und Verarbeitungshinweise sind im Datenblatt "Vectra" der Hoechst AG dokumentiert.

| Verfahrensparameter: | |
|---|---|
| Extruder | Massetemperatur: 290-300 °C |
| Spritzgußmaschine | Massetemperatur: 290-300 °C |
| | Werkzeugwandtemperatur: 120 °C |

| Eigenschaftswerte: | | | | |
|---|---|---|---|---|
| Tribologie | 100% Vectra A950 | 95% Vectra A950 5% oxidiertes Polyphenylensulfid | 90% Vectra A950 10% oxidiertes Polyphenylensulfid | 85% Vectra A950 15% oxidiertes Polyphenylensulfid |
| Abrieb (K-Faktor)* [10⁻⁶mm³/Nm] | 0,39 | 0,24 | 0,35 | 0,78 |

| | | | | |
|---|---|---|---|---|
| * Gleitgeschwindigkeit: 0,5 m/s, Anpreßdruck: 1 N/mm², Oberflächenrauhigkeit (R_{z}) = 3 µm | | | | |

| Zugversuch ISO 527 | 100% Vectra A950 | 95% Vectra A950 5% oxidiertes Polyphenylensulfid | 90% Vectra A950 10% oxidiertes Polyphenylensulfid | 85% Vectra A950 15% oxidiertes Polyphenylensulfid |
|---|---|---|---|---|
| Zug-E-Modul [N/mm²] | 8600 | 8110 | 7510 | 7200 |
| Zugfestigkeit [N/mm²] | 153 | 174 | 157 | 146 |
| Reißdehnung [%] | 4,2 | 5,3 | 5,2 | 5 |

| Druckversuch ISO 604 | 100% Vectra A950 | 95% Vectra A950 5% oxidiertes Polyphenylensulfid | 90% Vectra A950 10% oxidiertes Polyphenylensulfid | 85% Vectra A950 15% oxidiertes Polyphenylensulfid |
|---|---|---|---|---|
| Fließspannung [N/mm²] | 67,7 | 68,6 | 69,1 | 76,1 |
| Stauchung bei Fließspannung [%] | 9,5 | 10,6 | 6,6 | 18,2 |

### 5. Mischungen aus Polyphenylensulfid (PPS) und oxidiertem Polyphenylensulfid:

Es wurde ein mit 40 Gew.-% Glasfasern verstärktes PPS, ®Fortron 1140 L4, (Produktform: Granulat) der Hoechst AG, Frankfurt a.M., BR Deutschland verwendet. Produkteigenschaften und Verarbeitungshinweise sind im Datenblatt "Fortron" der Hoechst AG dokumentiert.

| Verfahrensparameter: | |
|---|---|
| Extruder | Massetemperatur: 310-320 °C |
| Spritzgußmaschine | Massetemperatur: 320-330 °C |
| | Werkzeugwandtemperatur: 140 °C |

| Eigenschaftswerte: | | | | |
|---|---|---|---|---|
| | 100% Fortron 1140L4 | 95% Fortron 1140L4 5% oxidiertes Polyphenylensulfid | 90% Fortron 1140L4 10% oxidiertes Polyphenylensulfid | 85% Fortron 1140L4 15% oxidiertes Polyphenylensulfid |
| Abrieb (K-Faktor)* [10-⁶mm³/Nm] | 2,13 | 1,11 | 1,62 | 1,44 |

| | | | | |
|---|---|---|---|---|
| * Gleitgeschwindigkeit: 0,5 m/s, Anpreßdruck: 1 N/mm², Oberflächenrauhigkeit (R_{z}) = 3 µm | | | | |

| | 95% Fortron 1140L4 5% oxidiertes Polyphenylensulfid | 90% Fortron1140L4 5% oxidiertes Polyphenylensulfid 5% Naturgraphit UF4 | 90% Fortron 1140L4 5% oxidiertes Polyphenylensulfid 3,3% Naturgraphit UF4 1,7% Molyform M 15 |
|---|---|---|---|
| Abrieb (K-Faktor)* [10⁻⁶mm³/Nm] | 1,11 | 1,33 | 1,42 |

| | | | |
|---|---|---|---|
| * Gleitgeschwindigkeit: 0,5 m/s, Anpreßdruck: 1 N/mm², Oberflächenrauhigkeit (R_{z}) = 3 µm | | | |

### 6. Mischungen aus Polyetherimid (PEI) und oxidiertem Polyphenylensulfid :

Als PEI wurde ®Ultem 1000 (Produktform: Granulat) der General Electric Plastics GmbH, Rüsselsheim, BR Deutschland verwendet. Produkteigenschaften und Verarbeitungshinweise sind im Datenblatt "Ultem" der General Electric dokumentiert.

| Verfahrensparameter: | |
|---|---|
| Extruder | Massetemperatur: 360-370 °C |
| Spritzgußmaschine | Massetemperatur: 370-380 °C |
| | Werkzeugwandtemperatur: 120 °C |

| Eigenschaftswerte: | | | | |
|---|---|---|---|---|
| | 100% Ultem 1000 | 95% Ultem 1000 5% oxidiertes Polyphenylensulfid | 90% Ultem 1000 10% oxidiertes Polyphenylensulfid | 85% Ultem 1000 15% oxidiertes Polyphenylensulfid |
| Abrieb (K-Faktor)* [10⁻⁶mm³/Nm] | 297 | 97 | 216 | 229 |

| | | | | |
|---|---|---|---|---|
| * Gleitgeschwindigkeit: 0,5 m/s, Anpreßdruck: 1 N/mm², Oberflächenrauhigkeit (R_{z}) = 0,5 µm | | | | |

| | 90% Ultem 1000 5% oxidiertes Polyphenylensulfid 5% Naturgraphit UF4 | 90% Ultem 1000 5% oxidiertes Polyphenylensulfid 5% Molyform M 15 | 90% Ultem 1000 5% oxidiertes Polyphenylensulfid 3,3% Naturgraphit UF4 1,7% Molyform M 15 |
|---|---|---|---|
| Abrieb (K-Faktor)* [10⁻⁶mm³/Nm] | 142 | 125 | 165 |

| | | | |
|---|---|---|---|
| * Gleitgeschwindigkeit: 0,5 m/s, Anpreßdruck: 1 N/mm², Oberflächenrauhigkeit (R_{z}) = 0,75 µm | | | |

### 7. Mischungen aus Polyetheretherketon (PEEK) und oxidiertem Polyphenylensulfid:

Als PEEK wurde PEEK 450G (Produktform: Granulat) der ®Victrex Deutschland GmbH, Hofheim, BR Deutschland verwendet. Produkteigenschaften und Verarbeitungshinweise sind im Datenblatt "Victrex PEEK" der ICI Materials, Middlesbrough, England dokumentiert.

| Verfahrensparameter: | |
|---|---|
| Extruder | Massetemperatur: 370-380 °C |
| Spritzgußmaschine | Massetemperatur: 370-380 °C |
| | Werkzeugwandtemperatur: 180 °C |

| Eigenschaftswerte: | | | | |
|---|---|---|---|---|
| | 100% PEEK 450G | 95% PEEK 450G 5% oxidiertes Polyphenylensulfid | 90% PEEK 450G 10% oxidiertes Polyphenylensulfid | 85% PEEK 450G 15% oxidiertes Polyphenylensulfid |
| Abrieb (K-Faktor)* [10⁻⁶mm³/Nm] | 5,7 | 4,4 | 3,7 | 3,7 |

| | | | | |
|---|---|---|---|---|
| * Gleitgeschwindigkeit: 0,5 m/s, Anpreßdruck: 1 N/mm², Oberflächenrauhigkeit (R_{z}) = 0,5 µm | | | | |

## Patentansprüche

1. Verwendung einer Polymermischung aus
A) 90 bis 99,5 Gew.-% mindestens eines Thermoplasten, der kein Polysulfon oder thermoplastisch verarbeitbares Fluorpolymer ist,
B) 0,5 bis 10 Gew.-% mindestens eines oxidierten Polyarylensulfids, das ein lineares oder verzweigtes Polyarylensulfid (-Ar-S-, Ar = Arylen) ist, dessen Schwefelgruppen teilweise oder vollständig in Sulfoxid- und/oder Sulfongruppen überführt worden sind, und
C) gegebenenfalls weiteren üblichen Additiven,
als Werkstoffe in Anwendungen, die einen geringen Abrieb und ein geringes Kriechverhalten fordern.
Die Gew.-%-Angaben beziehen sich auf das Gesamtgewicht der Polymermischung.

2. Verwendung einer Polymermischung nach Anspruch 1, **dadurch gekennzeichnet, daß** die Komponente A) 95 bis 99 Gew.-%, und die Komponente B) 1 bis 5 Gew.-% beträgt.

3. Verwendung einer Polymermischung nach Anspruch 1 oder 2, **dadurch gekennzeichnet, daß** als thermoplastischer Kunststoff Polyacrylamid, Polyacrylsäure, Polyacrylat, Polyacetal, Polyamid, Polycarbonat, Polyester, Polyimid, Polyurethan, Polymethylmethacrylat, Polyolefin, Polyoxyalkylen, Polyoxymethylen, Polyphenylenoxid, Polystyrol, Styrolcopolymer, Polyvinylchlorid, Polyvinylester, Polyvinylether, Polyvinylidenchlorid, Silikon, flüssigkristallines Polymer, Polyaryletherketon, Polyethersulfon, Polyphenylensulfid, Polyetherimid oder Mischungen bzw. Blends aus zwei oder mehreren dieser thermoplastischen Kunststoffe verwendet wird.

4. Verwendung einer Polymermischung nach einem oder mehreren der Ansprüche 1 bis 3, **dadurch gekennzeichnet, daß** als thermoplastischer Kunststoff Polyacetal, Polyester, flüssigkristallines Polymer, Polyaryletherketon, Polyethersulfon, Polyphenylensulfid, Polyetherimid oder Mischungen bzw. Blends aus zwei oder mehreren dieser thermoplastischen Kunststoffe verwendet wird.

5. Verwendung einer Polymermischung nach einem oder mehreren der Ansprüche 1 bis 4, **dadurch gekennzeichnet, daß** als oxidiertes Polyarylensulfid mindestens ein lineares oder verzweigtes Polyarylensulfid verwendet wird, bei dem mindestens 10%, bevorzugt mindestens 30% und insbesondere mindestens 60% der Schwefelbrücken in Sulfon- oder Sulfoxidbrücken umgewandelt sind.

6. Verwendung einer Polymermischung nach Anspruch 5, **dadurch gekennzeichnet, daß** als oxidiertes Polyarylensulfid mindestens ein oxidiertes Polyphenylensulfid verwendet wird.

7. Verwendung einer Polymermischung nach einem oder mehreren der Ansprüche 1 bis 6, **dadurch gekennzeichnet, daß** die Teilchengröße (d₅₀-Wert) der Komponente B) 0,3 bis 500 µm, vorzugsweise 1 bis 300 µm und insbesondere 5 bis 50 µm beträgt.

8. Verwendung einer Polymermischung nach einem oder mehreren der Ansprüche 1 bis 7, **dadurch gekennzeichnet, daß** sie als Komponente C) thermische Stabilisatoren, UV-Stabilisatoren, Antistatika, Flammschutzmittel, Farbstoffe, Pigmente, anorganische oder organische Füllstoffe enthält.

9. Verwendung einer Polymermischung nach einem oder mehreren der Ansprüche 1 bis 8, **dadurch gekennzeichnet, daß** die Polymermischung Gleitmittel, vorzugsweise Molybdändisulfid, Graphit oder Polytetrafluorethylen enthält.

10. Verwendung einer Polymermischung nach einem oder mehreren der Ansprüche 1 bis 9 als Zahnräder, Zahnstange, Lager, Ketten, Rollen, Räder oder Dichtungsmaterialien.

## Claims

1. The use of a polymer mixture made from
A) from 90 to 99.5% by weight of at least one thermoplastic other than polysulfone, and other than thermoplastically processable fluoropolymer,
B) from 0.5 to 10% by weight of at least one oxidized polyarylene sulfide which is a linear or branched polyarylene sulfide (-Ar-S-, Ar = arylene), some or all of the sulfur groups of which have been converted into sulfoxide groups and/or into sulfone groups, and
C) where appropriate, other conventional additives,
as materials in applications which demand low abrasion and low creep.
The % by weight data are based on the total weight of the polymer mixture.

2. The use of a polymer mixture as claimed in claim 1, which comprises from 95 to 99% by weight of component A), and from 1 to 5% by weight of component B).

3. The use of a polymer mixture as claimed in claim 1 or 2, wherein the thermoplastic is polyacrylamide, polyacrylic acid, polyacrylate, polyacetal, polyamide, polycarbonate, polyester, polyimide, polyurethane, polymethyl methacrylate, polyolefin, polyoxyalkylene, polyoxymethylene, polyphenylene oxide, polystyrene, styrene copolymer, polyvinyl chloride, polyvinyl ester, polyvinyl ether, polyvinylidene chloride, silicone, liquid-crystalline polymer, polyaryl ether ketone, polyether sulfone, polyphenylene sulfide, polyether imide or a mixture or blend of two or more of these thermoplastics.

4. The use of a polymer mixture as claimed in one or more of claims 1 to 3, wherein the thermoplastic used comprises polyacetal, polyester, liquid-crystalline polymer, polyaryl ether ketone, polyether sulfone, polyphenylene sulfide, polyether imide, or a mixture or blend of two or more of these thermoplastics.

5. The use of a polymer mixture as claimed in one or more of claims 1 to 4, wherein the oxidized polyarylene sulfide used comprises at least one linear or branched polyarylene sulfide in which at least 10%, preferably at least 30% and particularly preferably at least 60% of the sulfur bridges have been converted into sulfone bridges or sulfoxide bridges.

6. The use of a polymer mixture as claimed in claim 5, wherein the oxidized polyarylene sulfide used comprises at least one oxidized polyphenylene sulfide.

7. The use of a polymer mixture as claimed in one or more of claims 1 to 6, wherein the particle size (d₅₀ value) of component B) is from 0.3 to 500 µm, preferably from 1 to 300 µm and in particular from 5 to 50 µm.

8. The use of a polymer mixture as claimed in one or more of claims 1 to 7, wherein the polymer mixture includes, as component C), thermal stabilizers, UV stabilizers, antistats, flame retardants, dyes, pigments or inorganic or organic fillers.

9. The use of a polymer mixture as claimed in one or more of claims 1 to 8, wherein the polymer mixture includes lubricants, preferably molybdenum disulfide, graphite or polytetrafluoroethylene.

10. The use of a polymer mixture as claimed in one or more of claims 1 to 9 in the form of gear wheels, gear racks, bearings, chains, pulleys, rollers, wheels or gasket materials.

## Revendications

1. Utilisation d'un mélange de polymères constitué de
A) 90 à 99,5 % en poids d'au moins un thermoplastique, qui n'est pas une polysulfone, ni un fluoropolymère transformable par voie thermoplastique,
B) 0,5 à 10 % en poids d'au moins un poly(sulfure d'arylène) oxydé qui est un poly(sulfure d'arylène) linéaire ou ramifié (-Ar-S-, Ar = arylène), dont les groupements soufrés ont été transformés partiellement ou complètement en groupements oxyde de soufre et/ou sulfone, et
C) le cas échéant d'autres additifs usuels,
comme matériaux dans des utilisations qui exigent une usure faible et un comportement au fluage bas.
Les indications en % en poids se rapportent au poids total du mélange de polymères.

2. Utilisation d'un mélange de polymères selon la revendication 1, **caractérisée en ce que** le composant A) représente 95 à 99 % en poids et le composant B) 1 à 5 % en poids.

3. Utilisation d'un mélange de polymères selon la revendication 1 ou 2, **caractérisée en ce qu'**on utilise comme matériau synthétique thermoplastique un polyacrylamide, un poly(acide acrylique), un polyacrylate, un polyacétal, un polyamide, un polycarbonate, un polyester, un polyimide, un polyuréthane, un poly(méthacrylate de méthyle), une polyoléfine, un polyoxyalkylène, un polyoxyméthylène, un poly(oxyde de phénylène), un polystyrène, un copolymère de styrène, un poly(chlorure de vinyle), un poly(ester de vinyle), un polyvinyléther, un poly(chlorure de vinylidène), un silicone, un polymère à cristaux liquides, une polyaryléthercétone, une polyéthersulfone, un poly(sulfure de phénylène), un polyétherimide ou des mélanges ou, selon le cas, des assemblages de deux ou de plusieurs de ces matériaux synthétiques thermoplastiques.

4. Utilisation d'un mélange de polymères selon l'une ou plusieurs des revendications 1 à 3, **caractérisée en ce qu'**on utilise comme matériau synthétique thermoplastique un polyacétal, un polyester, un polymère à cristaux liquides, une polyaryléthercétone, une polyéthersulfone, un poly(sulfure de phénylène), un polyétherimide ou des mélanges ou, selon le cas, des assemblages de deux ou de plusieurs de ces matériaux synthétiques thermoplastiques.

5. Utilisation d'un mélange de polymères selon l'une ou plusieurs des revendications 1 à 4, **caractérisée en ce qu'**on utilise comme poly(sulfure d'arylène) oxydé au moins un poly(sulfure d'arylène) linéaire ou ramifié dans lequel au moins 10 %, de préférence au moins 30 % et en particulier au moins 60 % des ponts soufre ont été transformés en ponts sulfone ou oxyde de soufre.

6. Utilisation d'un mélange de polymères selon la revendication 5, **caractérisée en ce qu'**on utilise comme poly(sulfure d'arylène) oxydé au moins un poly(sulfure de phénylène) oxydé.

7. Utilisation d'un mélange de polymères selon l'une ou plusieurs des revendications 1 à 6, **caractérisée en ce que** la grosseur des particules (valeur d₅₀) du composant B) est de 0,3 à 500 µm, de préférence de 1 à 300 µm et en particulier de 5 à 50 µm.

8. Utilisation d'un mélange de polymères selon l'une ou plusieurs des revendications 1 à 7, **caractérisée en ce qu'**il contient comme composant C) des stabilisants thermiques, des stabilisants aux UV, des antistatiques, des agents de protection contre les flammes, des colorants, des pigments, des charges inorganiques ou organiques.

9. Utilisation d'un mélange de polymères selon l'une ou plusieurs des revendications 1 à 8, **caractérisée en ce que** le mélange de polymères contient un lubrifiant, de préférence le disulfure de molybdène, le graphite ou le polytétrafluoroéthylène.

10. Utilisation d'un mélange de polymères selon l'une ou plusieurs des revendications 1 à 9 comme roues dentées, crémaillères, paliers, chaînes, galets, roues ou matériaux d'étanchéité.
